# EUROPÄISCHE PATENTSCHRIFT

(11) **EP 3 743 574 B1**
(45) Veröffentlichungstag und Bekanntmachung des Hinweises auf die Patenterteilung: **13.03.2024**
(21) Anmeldenummer: 19705094.1
(22) Anmeldetag: 23.01.2019
(51) Int. Cl.: E04G 21/04, F16L 3/00, B65G 53/42

(54) **GROSSMANIPULATOR MIT ENDSCHLAUCHHALTER**
LARGE MANIPULATOR WITH END TUBE HOLDER
MANIPULATEUR DE GRANDE TAILLE AVEC SUPPORT D'UN TUYAU D'EXTREMITE

(30) Priorität: 23.01.2018 AT 500562018
(43) Veröffentlichungstag der Anmeldung: 02.12.2020
(73) Patentinhaber: Schwing GmbH, 9431 St. Stefan im Lavanttal (AT)
(72) Erfinder: EDLER, Jörg, 8580 Köflach (AT); KRIEGL, Daniel, 8582 Rosenthal a.d.K. (AT); HÖRHAN, Stefan, 8461 Ehrenhausen (AT)
(74) Vertreter: Schneiders & Behrendt Bochum
(86) Internationale Anmeldenummer: PCT/EP2019/051577
(87) Internationale Veröffentlichungsnummer: WO 2019/145334

(56) Entgegenhaltungen:
- CN-U- 203 947 783
- JP-A- S5 740 066
- KR-A- 20140 029 845

## Beschreibung

Die Erfindung betrifft einen Großmanipulator mit einem Drehschemel, der drehbar um eine Hochachse auf einem Fahrzeuggestell des Großmanipulators angeordnet ist, wobei auf dem Drehschemel ein ausfaltbarer Knickmast aufgebaut ist, der eine Mehrzahl von Mastsegmenten aufweist, wobei die Mastsegmente an Knickgelenken jeweils um Knickachsen gegenüber einem benachbarten Mastsegment verschwenkbar sind, wobei an dem letzten, die Mastspitze bildenden Mastsegment ein flexibler Endschlauch angeordnet ist, wobei der Endschlauch an dem letzten Mastsegment mittels einer Endschlauchhalterung fixierbar ist, wobei die Endschlauchhalterung mindestens einen an dem letzten Mastsegment angeordneten Haltebügel umfasst.

Derartige Großmanipulatoren sind seit Jahren am Markt erhältlich. Die Endschlauchhalterung am letzten Mastsegment wird regelmäßig durch am Mastsegment fest montierte Haltebügel erreicht. Diese Haltebügel verfügen teilweise über eine federunterstützte Verriegelung, welche den Endschlauch in der Endschlauchhalterung arretiert. Nach manueller Freigabe dieser Verriegelung kann der Endschlauch aus den Haltebügeln der Endschlauchhalterung herausgehoben werden oder der Endschlauch fällt aus den Haltebügeln nach der Freigabe heraus. Die federunterstützte Verriegelung ist hierbei so ausgelegt, dass der Endschlauch beim Einfalten des Mastes durch eine Drehung des letzten Mastsegmentes mit den Haltebügeln der Endschlauchhalterung eingefangen wird und eine automatische Verriegelung erfolgt.

Auch aus JP S57 40066 A und KR 20140029845 A sind Großmanipulatoren mit Endschläuchen bekannt.

Insbesondere bei Großmanipulatoren mit Knickmasten, deren Mastsegmente um große Winkel verschwenkbar sind, stören die fest am letzten Mastsegment montierten Haltebügel der Endschlauchhalterung, da der Endschlauch versehentlich eingefangen und in der Endschlauchhalterung verriegelt werden kann.

Aus diesem Grund wird eine Endschlauchhalterung für den Endschlauch benötigt, die einerseits den Endschlauch im Fahrbetrieb sichert, aber andererseits während des Betonierbetriebes des Großmanipulators ein weitgehend uneingeschränktes Drehen, insbesondere des letzten Mastsegmentes, gegenüber dem benachbarten, vorletzten Mastsegment ermöglicht. Nach dem Betonierbetrieb soll der Endschlauch mit der Endschlauchhalterung eingefangen und automatisch verriegelt werden können.

Es ist Aufgabe der Erfindung, einen verbesserten Großmanipulator anzugeben, der eine einfach zu nutzende Endschlauchhalterung bietet. Insbesondere soll die Endschlauchhalterung während des Einsatzes des Großmanipulators nicht stören und nach Abschluss des Einsatzes den Endschlauch zuverlässig sichern.

Gelöst wird diese Aufgabe durch einen Großmanipulator mit den Merkmalen des Anspruchs 1.

Dadurch, dass der Haltebügel gegenüber dem letzten Mastsegment in zumindest drei Schwenkstellungen verschwenkbar ausgebildet ist, wobei der Haltebügel in der ersten Schwenkstellung den Endschlauch an dem letzten Mastsegment hält, wobei die Endschlauchhalterung den Endschlauch in der ersten Schwenkstellung für einen Fahrbetrieb am letzten Mastsegment sichert, der Haltebügel den Endschlauch in der zweiten Schwenkstellung in einer Freigaberichtung freigibt und der Haltebügel in der dritten Schwenkstellung an das letzte Mastsegment angeklappt ist, kann ein Großmanipulator geschaffen werden, der eine einfach zu nutzende Endschlauchhalterung bietet, welche während des Einsatzes des Großmanipulators nicht stört und nach Abschluss des Einsatzes den Endschlauchs zuverlässig sichert. Mit dem gegenüber dem letzten Mastsegment verschwenkbaren Haltebügel kann die Endschlauchhalterung den Endschlauch in der ersten Schwenkstellung für den Fahrbetrieb am letzten Mastsegment sichern. In der zweiten Schwenkstellung kann der verschwenkbare Haltebügel den Endschlauch in der Freigaberichtung freigeben. Mit der dritten Schwenkstellung lässt sich der vorgeschlagene Haltebügel zudem an das letzte Mastsegment anklappen, sodass der Haltebügel während des Einsatzes nicht stört. Mit einer solchen Endschlauchhalterung kann das letzte Mastsegment gegenüber dem benachbarten Mastsegment über große Schwenkwinkel verschwenkt werden, ohne dass der angeklappte Haltebügel die Bewegung des Endschlauchs stört.

Vorteilhafte Ausgestaltungen und Weiterbildungen der Erfindung ergeben sich aus den abhängigen Ansprüchen. Gemäß einer vorteilhaften Ausgestaltung der Erfindung ist vorgesehen, dass die Form des Haltebügels an die Außenkontur des letzten Mastsegmentes angepasst ist, derart, dass der Haltebügel in der dritten Schwenkstellung im Wesentlichen über seine gesamte Längserstreckung an dem letzten Mastsegment anliegt. Mit einem über die gesamte Längserstreckung in der dritten Schwenkstellung anliegenden Haltebügel kann der Haltebügel besonders platzsparend an das Mastsegment angeklappt werden. Hierdurch stört der angeklappte Haltebügel nicht während des Einsatzes.

Besonders vorteilhaft ist eine Ausführungsform, die vorsieht, dass der mindestens eine Haltebügel in nur einer Schwenkachse gegenüber dem letzten Mastsegment verschwenkbar ist. Mit einem in nur einer Schwenkachse verschwenkbaren Haltebügel ist eine einfache Möglichkeit gegeben, die Sicherung, Freigabe und das Einklappen des Haltebügels in einer Verschwenkbewegung um eine Achse zu verbinden. Dies macht die Konstruktion der Endschlauchhalterung besonders einfach und fehlerunanfällig.

Eine besonders vorteilhafte Ausführung der Erfindung sieht vor, dass ein Aktor die Verschwenkung des mindestens einen Haltebügels gegenüber dem letzten Mastsegment bewirkt. Mit einem Aktor lässt sich die Verschwenkung des Haltebügels automatisch steuern oder vom Bediener fernsteuern. Vorzugsweise ist der Aktor als pneumatischer Zylinder ausgebildet.

Von besonderem Vorteil ist gemäß einer Ausgestaltung, dass eine Feder die Verschwenkung des mindestens einen Haltebügels gegenüber dem letzten Mastsegment bewirkt.

Eine vorteilhafte Ausführung ist, dass der Aktor eine Verschwenkung des mindestens einen Haltebügels in einer ersten Verschwenkrichtung bewirkt und die Federkraft der Feder eine Verschwenkung des mindestens einen Haltebügels in einer zweiten, der ersten Verschwenkrichtung entgegengesetzten Verschwenkrichtung bewirkt. Mit einem Aktor, der den Haltebügel in der ersten Verschwenkrichtung verschwenkt gegen die Federkraft einer Feder, die dann eine Verschwenkung in entgegengesetzter Verschwenkrichtung bewirkt, kann die Position des Haltebügels einfach eingestellt werden. Bei Ausfall des Aktors bewirkt die Feder weiterhin ein Verschwenken in der entsprechenden Verschwenkrichtung, sodass der Haltebügel zuverlässig in diese Verschwenkrichtung bewegt wird. Besonders vorteilhaft ist, wenn diese Verschwenkrichtung zu einem Schließen des Haltebügels um den Endschlauch führt. Hier wird der Endschlauch dann bei Ausfall des Aktors durch die Federkraft der Feder gesichert.

Besonders vorteilhaft ist eine Ausführungsform, bei der vorgesehen ist, dass eine Schwenkpositionserfassungsvorrichtung die Stellung des mindestens einen Haltebügels gegenüber dem letzten Mastsegment erfasst. Mit einer solchen Schwenkpositionserfassungsvorrichtung kann die Stellung des Haltebügels gegenüber dem letzten Mastsegment zuverlässig bestimmt werden, was die Ansteuerung des Aktors am Haltebügel und die Handhabung vereinfacht.

Eine besonders vorteilhafte Ausführungsform der Erfindung sieht vor, dass der mindestens eine Haltebügel räumlich gebogen ist und mindestens eine Anlagefläche und mindestens eine Auflagefläche für den Endschlauch bildet. Mit dem räumlich gebogenen Haltebügel, der die Auflagefläche bildet, auf welcher der Endschlauch aufliegt, und einer Anlagefläche, an welcher der Endschlauch anliegt, kann der Endschlauch mit dem Haltebügel zuverlässig gesichert werden. Abhängig von der Position des letzten Mastsegmentes können die Auflagefläche und die Anlagefläche am Haltebügel durch unterschiedliche Bereiche am Haltebügel gebildet sein.

Eine vorteilhafte Ausführung ist, dass der Haltebügel zweifach abgewinkelt ausgebildet ist, mit einem ersten, von der Schwenkachse ausgehenden Abschnitt, einem sich an den ersten Abschnitt anschließenden und gegenüber diesem um 90° abgewinkelten zweiten Abschnitt, der parallel zur Schwenkachse verläuft und die Anlagefläche bildet, und einem sich an den zweiten Abschnitt anschließenden und gegenüber diesem wiederum um 90° abgewinkelten dritten Abschnitt, der die Auflagefläche bildet, wobei der dritte Abschnitt relativ zu der durch den ersten und den zweiten Abschnitt gebildeten Ebene unter einem von 90° verschiedenen Winkel verläuft, vorzugsweise unter einem Winkel < 80°, besonders bevorzugt < 70°. Durch diese einfache Formgebung kann der Haltebügel seine Funktion in den drei Schwenkstellungen erfüllen. In der ersten Schwenkstellung wird der Endschlauch von dem letzten Mastsegment und den drei Abschnitten des Haltebügels allseitig umschlossen und somit sicher gehalten. In der zweiten Schwenkstellung ist der Haltebügel soweit verschwenkt, dass der dritte Abschnitt im Wesentlichen parallel zum letzten Mastsegment verläuft und folglich der Endschlauch nicht mehr auf der Auflagefläche aufliegt. Dadurch wird der Endschlauch in Richtung parallel zum zweiten Abschnitt des Haltebügels, d.h. senkrecht zum letzten Mastsegment freigegeben. Die drei jeweils um 90° zueinander abgewinkelten Abschnitte bilden eine im Wesentlichen rechteckige oder quadratische Innenkontur aus, durch die das einen dazu korrespondierend rechteckigen oder quadratischen Querschnitt aufweisende letzte Mastsegment in der dritten Schwenkstellung hindurchgreifen kann, so dass der Haltebügel im angeklappten Zustand vollständig am Mastsegment anliegt und bei Mastbewegungen nicht stört.

Besonders vorteilhaft ist eine Ausführungsform, die vorsieht, dass der Knickmast eine Mastpositionserfassungseinrichtung umfasst, die dazu ausgebildet ist, die Position des letzten Mastsegments zu bestimmen, wobei eine Steuereinrichtung vorgesehen ist, die die Freigabe des Endschlauchs aus der Endschlauchhalterung abhängig von der erfassten Position des letzten Mastsegments steuert. Mit einer Freigabe des Endschlauchs abhängig von der erfassten Position des letzten Mastsegments können Unfälle bei der Freigabe des Endschlauchs und ein unkontrolliertes Herumschwingen des Endschlauchs in Bodennähe vermieden werden.

Eine vorteilhafte Ausführung ist, dass die Mastpositionserfassungseinrichtung einen Neigungssensor am letzten Mastsegment umfasst. Mit einem Neigungssensor am letzten Mastsegment, lässt sich die Position des letzten Mastsegmentes sehr einfach ermitteln.

Von besonderem Vorteil ist gemäß einer Ausgestaltung, dass der mindestens eine Haltebügel am letzten Mastsegment gegen Verschwenkung verriegelbar ist. Mit der Verriegelung des Haltebügels kann dieser in der gewünschten Verschwenkstellung gesichert werden.

Besonders vorteilhaft ist eine Ausführungsform, die vorsieht, dass die Verschwenkung des mindestens einen Haltebügels am letzten Mastsegment fernsteuerbar ist. Die Möglichkeit, den Haltebügel ferngesteuert zu verschwenken, macht es möglich den Endschlauch auch in großer Höhe freizugeben oder einzufangen und am letzten Mastsegment zu sichern.

Von besonderem Vorteil ist gemäß einer Ausgestaltung, dass die Endschlauchhalterung mehrere Haltebügel umfasst, wobei die Haltebügel über ein Übertragungselement verbunden sind und hierdurch gemeinsam eine Verschwenkbewegung um eine jeweilige Schwenkachse der Haltebügel ausführen. Mit mehreren Haltebügeln an der Endschlauchhalterung können besonders lange Endschläuche zuverlässig am letzten Mastsegment gesichert werden. Durch die gemeinsame Verschwenkbewegung der Haltebügel kann lediglich ein Aktor und eine Feder für die Verschwenkung mehrerer Haltebügel verwendet werden.

Eine vorteilhafte Ausführung ist, dass das Übertragungselement als Seilzug oder Stange ausgebildet ist. Ein Seilzug oder eine Stange stellen eine einfache Möglichkeit dar, die Übertragung der Verschwenkbewegung auf die Haltebügel der Endschlauchhalterung zu übertragen.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen dargestellt und werden nachfolgend näher beschrieben. Einander entsprechende Gegenstände sind in allen Figuren mit den gleichen Bezugszeichen versehen. Es zeigen:
- Figur 1: erfindungsgemäßer Großmanipulator,
- Figur 2: Knickmast,
- Figur 3: letztes Mastsegment mit gesichertem Endschlauch,
- Figur 4: letztes Mastsegment mit freigegebenem Endschlauch,
- Figur 5: letztes Mastsegment in Bodennähe,
- Figur 6: Haltebügel,
- Figur 7a, 7b 7c: Endschlauchhalterung in erster Schwenkstellung,
- Figur 8a, 8b, 8c: Endschlauchhalterung in zweiter Schwenkstellung,
- Figur 9a, 9b 9c: Endschlauchhalterung in dritter Schwenkstellung,
- Figur 10: Endschlauchhalterung mit Aktor in erster Schwenkstellung,
- Figur 11: Endschlauchhalterung mit Aktor in zweiter Schwenkstellung,
- Figur 12: Endschlauchhalterung mit Aktor in dritter Schwenkstellung und
- Figur 13: Enschlauchhalterung mit zwei Haltebügeln.

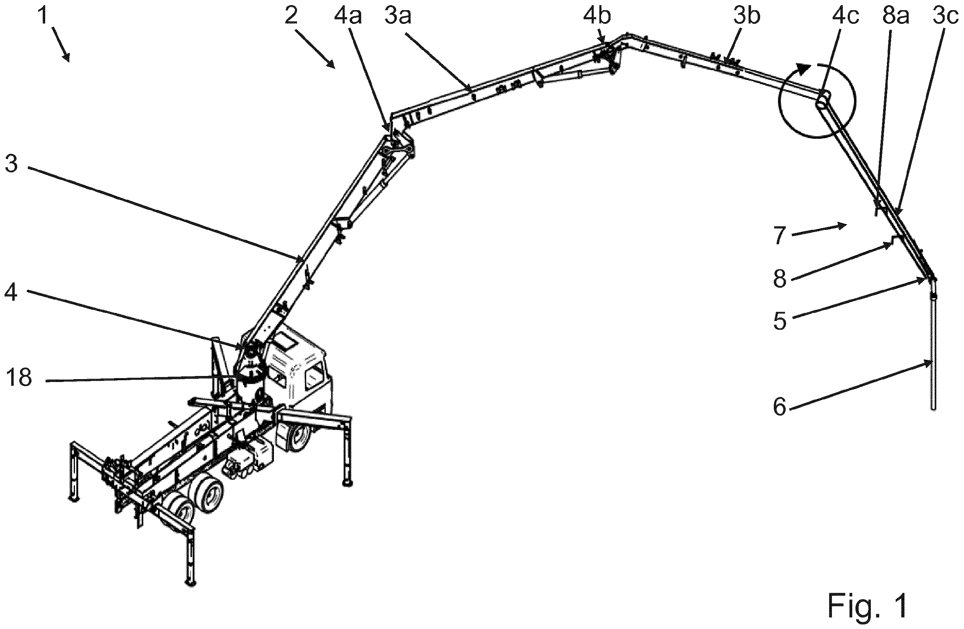

In Figur 1 mit dem Bezugszeichen 1 bezeichnet ist ein erfindungsgemäßer Großmanipulator dargestellt. Der in Figur 1 gezeigte Großmanipulator 1 ist nach Art einer Autobetonpumpe aufgebaut. Der Großmanipulator 1 verfügt über einen Drehschemel 18, der drehbar um eine Hochachse auf dem Fahrzeuggestell des Großmanipulators 1 angeordnet ist. Auf dem Drehschemel 18 aufgebaut ist ein ausgefalteter Knickmast 2 gezeigt. Die vier Mastsegmente 3, 3a, 3b, 3c sind über Knickgelenke 4, 4a, 4b, 4c jeweils um Knickachsen gegenüber dem benachbarten Mastsegment 3, 3a, 3b, 3c oder dem Drehschemel 18 verschwenkbar. Hierzu sind zwischen dem Drehschemel 18 und dem ersten Mastsegment 3 sowie zwischen den Mastsegmenten 3, 3a, 3b jeweils Hydraulikzylinder angeordnet, die über Hebelgetriebe eine Verschwenkung der Mastsegmente 3, 3a, 3b gegeneinander sowie des ersten Mastsegmentes 3 gegenüber dem Drehschemel 18 ermöglichen. Zwischen dem letzten, die Mastspitze 5 bildenden Mastsegment 3c und dem vorletzten Mastsegment 3b ist ein Drehantrieb im Knickgelenk 4c angeordnet, welcher eine unendliche Verdrehung des letzten Mastsegmentes 3c gegenüber dem vorletzten Mastsegment 3b ermöglicht. Diese Drehbewegung im Knickgelenk 4c zwischen dem vorletzten 3b und dem letzten Mastsegment 3c ist durch den kreisrunden Pfeil angedeutet. Gerade diese Drehbewegung stellt die Konstruktion der Endschlauchhalterung 7 am letzten Mastsegment 3c vor neue Anforderungen. Die am letzten Mastsegment 3c gebildete Endschlauchhalterung 7 soll eine Fixierung des am letzten Mastsegment 3c angeordneten Endschlauchs 6 ermöglichen. Hierzu weist die Endschlauchhalterung 7 zwei Haltebügel 8, 8a auf. Wären diese Haltebügel 8, 8a starr am letzten Mastsegment 3c befestigt, würden die Haltebügel 8, 8a den Endschlauch 6 ungewollt einfangen und fixieren oder einfach die Drehbewegung des letzten Mastsegment 3c gegenüber dem vorletzten Mastsegment 3b einschränken. Aus diesem Grund wird vorgeschlagen, dass die Haltebügel 8, 8a gegenüber dem letzten Mastsegment 3c in drei Schwenkstellungen verschwenkbar ausgebildet sind. In einer ersten Schwenkstellung sollen die Haltebügel 8, 8a den Endschlauch 6 an dem letzten Mastsegment 3c sichern. Eine zweite Schwenkstellung der Haltebügel 8, 8a gegenüber dem letzten Mastsegment 3c soll eine Freigabe des Endschlauchs 6 bewirken. In einer dritten Schwenkstellung soll der Haltebügel 8, 8a an das letzte Mastsegment 3c angeklappt werden können. Hierdurch ist eine Endschlauchhalterung 7 gegeben, deren Haltebügel 8, 8a nicht bei der angedeuteten Drehbewegung des letzten Mastsegmentes 3c gegenüber dem vorletzten Mastsegments 3b stören.

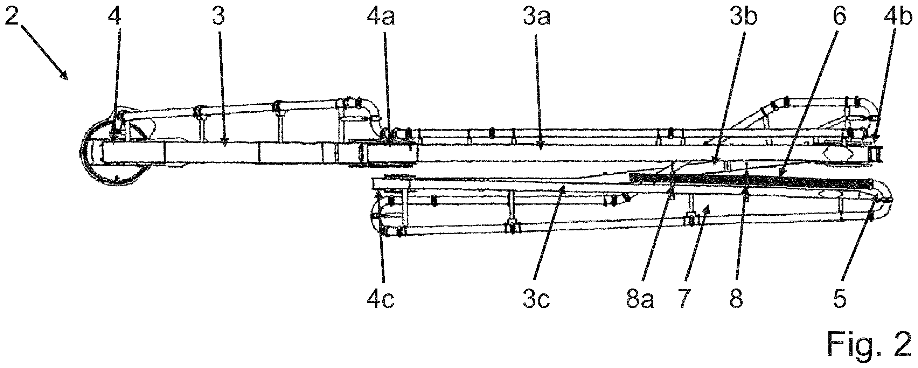

In Figur 2 ist ein Knickmast 2 gemäß Figur 1 in teilweise zusammengeklapptem Zustand gezeigt. Der Endschlauch 6 am letzten Mastsegment 3c ist hier durch die Endschlauchhalterung 7 fixiert und am letzten Mastsegment 3c gesichert. Dies ist insbesondere bei Fahrten des als Autobetonpumpe ausgebildeten Großmanipulators 1 (Fig. 1) von Bedeutung, da durch die Sicherung des Endschlauchs 6 am letzten Mastsegment 3c die Verkehrssicherheit erhöht wird.

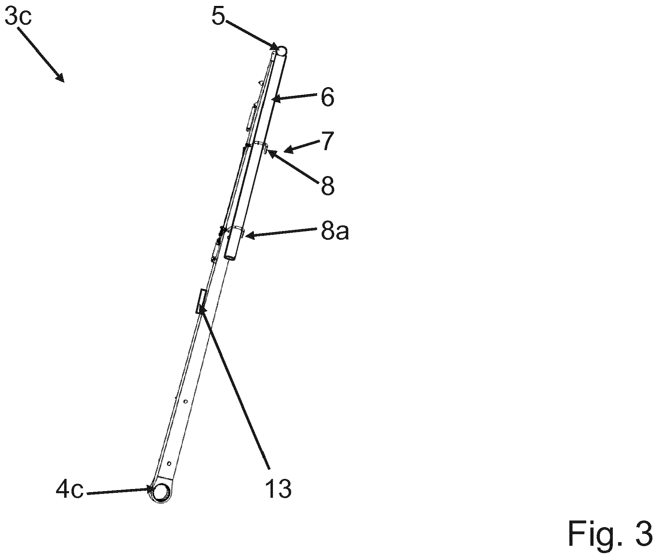

Die Figur 3 zeigt das letzte, die Mastspitze 5 bildende Mastsegment 3c und den daran angeordneten flexiblen Endschlauch 6. Der Endschlauch 6 ist hier mittels der Endschlauchhalterung 7 am letzten Mastsegment 3c fixiert. Hierzu umgreifen die Haltebügel 8, 8a den Endschlauch 6 und legen ihn am Mastsegment 3c fest.

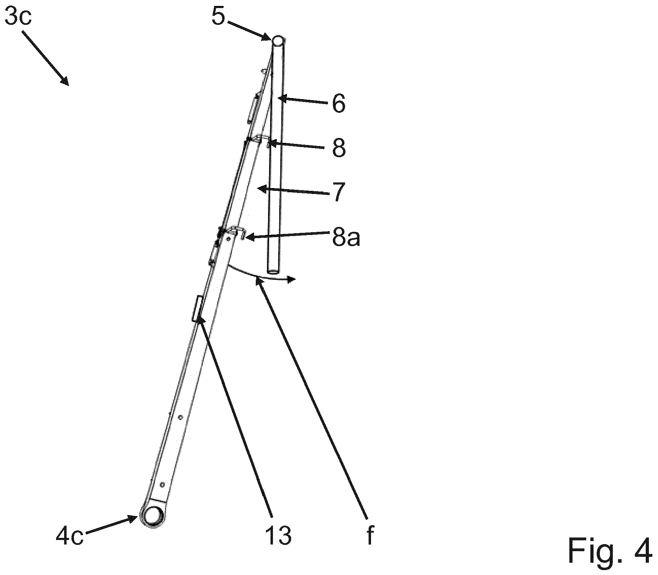

Aus Figur 4 geht das letzte Mastsegment 3c gemäß Figur 3 hervor. Hier ist der Endschlauch 6 allerdings freigegeben und in Freigaberichtung f verschwenkt. Die Freigabe des Endschlauchs 6 erfolgt vorzugsweise ferngesteuert, indem die Haltebügel 8, 8a gegenüber dem letzten Mastsegment 3c verschwenkt werden. Um eine sichere Handhabung bei der ferngesteuerten Freigabe des Endschlauchs 6 zu ermöglichen umfasst der Knickmast 2 eine Mastpositionserfassungseinrichtung 13 die dazu ausgebildet ist, die Position des letzten Mastsegment 3c zu bestimmen. Eine Steuereinrichtung ist dazu vorgesehen die Freigabe des Endschlauchs 6 aus der Endschlauchhalterung 7 abhängig von der erfassten Position des letzten Mastsegmentes 3c zu steuern. Hierdurch kann sichergestellt werden, dass der Endschlauch 6 nicht in Bodennähe freigegeben wird, was zu Verletzungen führen kann. Die in Figur 4 gezeigte Stellung des letzten Mastsegmentes 3c eignet sich besonders für die Freigabe des Endschlauchs 6, da die Verschwenkbewegung des Endschlauchs 6 in Freigaberichtung f hier nur begrenzt ist.

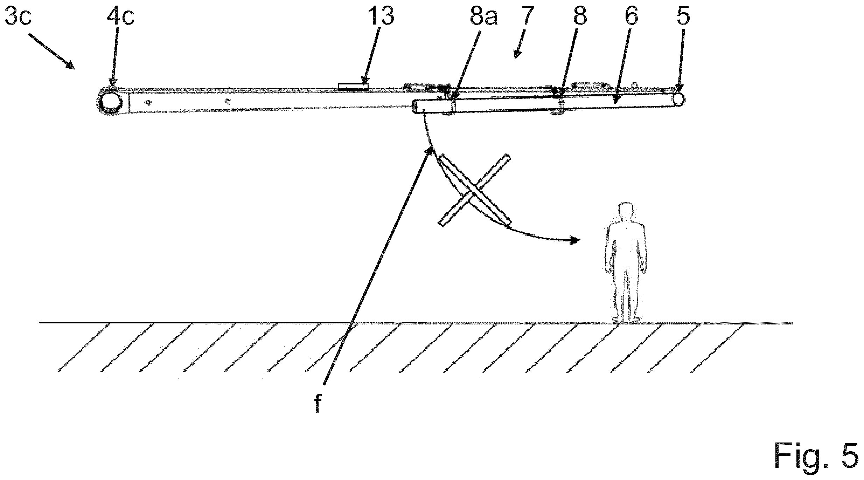

Hierzu sei auch auf Figur 5 verwiesen, die andeutet, dass der am letzten Mastsegment 3c angeordnete flexible Endschlauch 6 in bestimmten Stellungen des letzten Mastsegment 3c in Bodennähe eine Gefahr für in der Nähe befindliche Personen darstellt, da diese von dem freigegebenen Endschlauch 6 getroffen werden können. Die Mastpositionserfassungsvorrichtung 13 umfasst in einem besonders einfachen Fall einen Neigungssensor, über dessen Signale die Position des letzten Mastsegments 3c bestimmt werden kann. Zur Sicherung gegen unkontrollierte Freigabe des Endschlauchs 6 können die Haltebügel 8, 8a am letzten Mastsegment 3c gegen Verschwenkung manuell verriegelt und entriegelt werden.

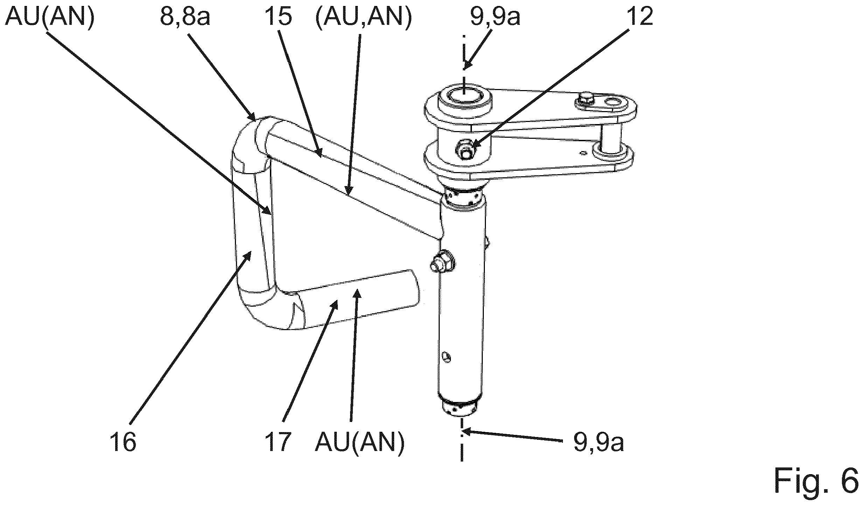

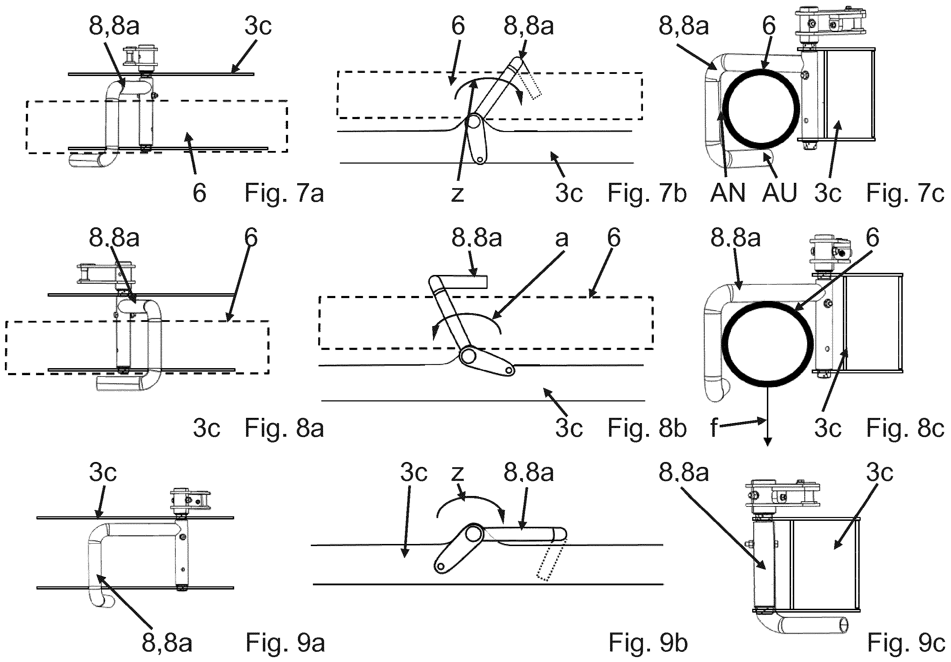

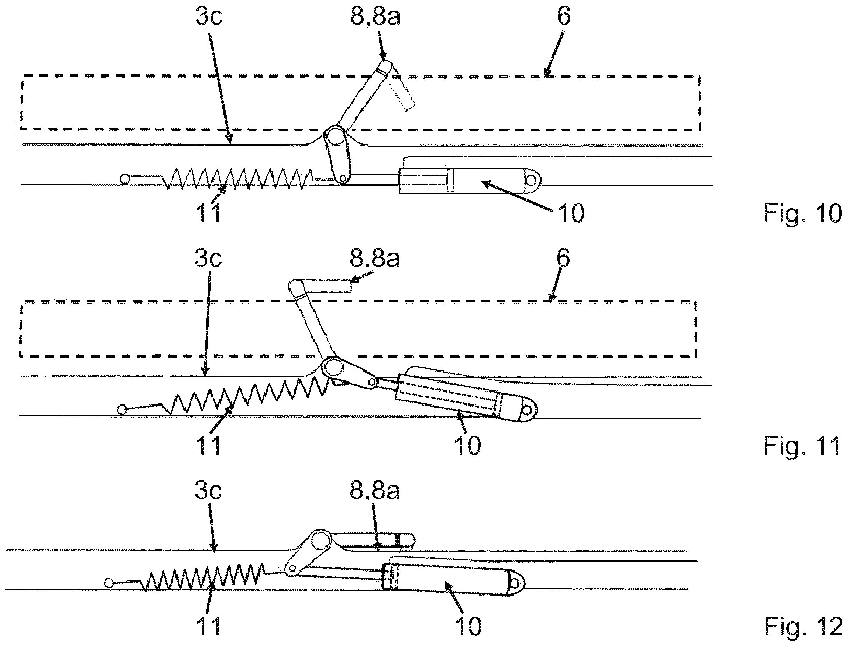

Die Figur 6 zeigt einen Haltebügel 8, 8a der Endschlauchhalterung 7 (Fig. 1) in einer perspektivischen Darstellung. In dieser Darstellung zu erkennen ist, dass die Form des Haltebügel 8, 8a an die Außenkontur des letzten Mastsegment 3c (Fig. 3) angepasst ist und zwar derart, dass der Haltebügel 8, 8a in der dritten Schwenkstellung im Wesentlichen über seine gesamte Erstreckung am letzten Mastsegment 3c anliegt. Dies ist besonders gut in den Figuren 9a bis 9c zu erkennen. Der Haltebügel 8, 8a bildet eine Auflagefläche AU für den Endschlauch 6 (Fig. 5), auf welcher der Endschlauch 6 (Fig. 7c) aufliegt und zusätzlich ist mindestens eine Anlagefläche AN gebildet, an welcher der Endschlauch 6 (Fig. 7c) bei Auflage auf der Auflagefläche AU (Fig. 7c) anliegt. Der Haltebügel 8, 8a ist in nur einer angedeuteten Schwenkachse 9, 9a gegenüber dem letzten Mastsegment 3c (Fig. 7b) verschwenkbar. Dies macht die Verschwenkung des Haltebügels 8, 8a mittels Aktor 10 (Figur 10-13) besonders einfach möglich. Außerdem ist hierdurch eine einfache und fehlerunanfällige Konstruktion für den verschwenkbaren Haltebügel 8, 8a gegeben. Wie weiter zu erkennen ist, ist der Haltebügel 8, 8a zweifach abgewinkelt ausgebildet. Ein erster Abschnitt 15 des Haltebügel 8,8a geht von der Schwenkachse 9, 9a aus. An den ersten Abschnitt 15 schließt sich ein um 90° abgewinkelter zweiter Abschnitt 16 an, der parallel zur Schwenkachse 9, 9a verläuft. An diesem zweiten Abschnitt 16 schließt sich wiederum ein um 90° abgewinkelter dritter Abschnitt 17 an, der relativ zu der durch den ersten 15 und den zweiten Abschnitt 16 gebildeten Ebene unter einem von 90° verschiedenen Winkel verläuft. Vorzugsweise sollte dieser Winkel kleiner als 80° besonders bevorzugt kleiner als 70° sein. Der Haltebügel 8, 8a bildet im Wesentlichen eine rechteckige Innenkontur aus, durch welche das korrespondierend geformte Mastsegment 3c in der dritten Schwenkstellung hindurch greift. Dies ist insbesondere in den Figuren 9a bis 9c ersichtlich.

In den Figuren 7a bis 7c ist der Haltebügel 8, der Endschlauchhalterung 7 (Fig. 1) in der ersten Schwenkstellung gezeigt. In dieser Stellung hält der Haltebügel 8, 8a den Endschlauch 6 an dem Mastsegment 3c fest. In der in Figur 7c ersichtlichen Stellung des Mastsegmentes 3c bildet der dritte untere Abschnitt 17 (Fig. 6) des Haltebügels 8, 8a die Auflagefläche AU für den Endschlauch 6. Der zweite senkrechte Abschnitt 16 (Fig. 6) wiederum bildet in der gezeigten Stellung des letzten Mastsegmentes 3c die Anlagefläche AN, mit welcher der Endschlauch 6 in Position gehalten wird.

Die Figuren 8a bis 8c zeigen den Haltebügel 8, 8a der Endschlauchhalterung 7 (Fig. 1) in der zweiten Schwenkstellung. Hier ist der Haltebügel 8, 8a in einer ersten Verschwenkrichtung a um die Schwenkachse 9, 9a (Fig. 6) verschwenkt, sodass der Endschlauch 6 in Freigaberichtung f freigegeben ist. In dieser Stellung des Haltebügels 8, 8a kann der am letzten Mastsegment 3c angeordnete Endschlauch 6 aus der Endschlauchhalterung 7 in Freigaberichtung f herausgleiten bzw. fallen.

Die Figuren 9a bis 9c zeigen die dritte Schwenkstellung des Haltebügels 8, 8a am letzten Mastsegment. Hier ist der Haltebügel 8, 8a entgegen der Verschwenkrichtung a in Verschwenkrichtung z verschwenkt, sodass der Haltebügel 8, 8a an das letzte Mastsegment 3c angeklappt ist. Die Form des Haltebügels 8, 8a ist an die Außenkontur des Mastsegmentes 3c so angepasst, dass der Haltebügel 8, 8a in der gezeigten Schwenkstellung im Wesentlichen über seine gesamte Längserstreckung an dem Mastsegment 3c anliegt.

In Figur 10 ist ein über einen Aktor 10 gegenüber dem Mastsegment 3c verschwenkbarer Haltebügel 8, 8a gezeigt. Der Haltebügel 8, 8a befindet sich hier in der ersten Schwenkstellung, sodass der Haltebügel 8, 8a den Endschlauch 6 am letzten Mastsegment 3c festlegt. Während der Aktor 10 eine Verschwenkung des Haltebügels 8, 8a in einer ersten Verschwenkrichtung a bewirkt, bewirkt eine Feder 11 eine Verschwenkung des Haltebügels 8, 8a in einer zweiten, der ersten Verschwenkrichtung a entgegengesetzten Verschwenkrichtung z. Dadurch, dass die Feder 11 gegen den Aktor 10 arbeitet, kann bei Ausfall beziehungsweise Nicht-Betätigung des Aktors 10 eine Sicherung des Endschlauchs 6 am Mastsegment 3c sichergestellt werden. In der ersten Schwenkstellung drückt die Feder 11 den Haltebügel 8, 8a gegen den Endschlauch 6, da der als Druckuftzylinder ausgebildete Aktor 10 drucklos ist.

Die Figur 11 zeigt den Haltebügel 8, 8a gemäß Figur 10 in der zweiten Schwenkstellung. Hier ist der Endschlauch 6 freigegeben und kann in Freigaberichtung f (Fig. 8c) aus der Endschlauchhalterung 7 (Fig. 1) herausgleiten. Die Verschwenkung des Haltebügels 8, 8a wird hier durch den Aktor 10 bewirkt, der gegen die Feder 11 arbeitet. In der zweiten Schwenkstellung ist die Feder 11 gespannt, da der als Druckluftzylinder ausgebildete Aktor 10 betätigt wird. Die zweite Schwenkstellung ermöglicht die Aufnahme und die Freigabe des Endschlauches 6.

Die Figur 12 zeigt den Haltebügel gemäß Figur 10 und 11 in der dritten Schwenkstellung, in welcher der Haltebügel 8, 8a am Mastsegment 3c anliegt. In dieser Schwenkstellung wird der Haltebügel 8, 8a durch die Feder 11 verschwenkt, da der als pneumatischer Zylinder ausgebildete Aktor 10 drucklos geschaltet ist. In der dritten Schwenkstellung drückt die Feder 11 den Haltbügel 8, 8a gegen das Mastsegment 3c, sodass der Endschlauch am Haltbügel vorbeischwenken kann. In dieser Stellung ist der als Druckluftzylinder ausgebildete Aktor 10 drucklos.

Der Aktor 10 und die Feder 11 können auch als eine Baueinheit ausgebildet sein, das heißt, dass die Rückholfeder 11 in den Aktor 10 je nach Montageseite, als Zug- oder Druckfeder ausgebildet ist und dafür sorgt, dass im drucklosen Zustand des Aktors 11 der Haltebügel 8 den Endschlauch 6 sicher in seiner Position hält beziehungsweise den Haltebügel 8 an den Mast 3c verschwenkt.

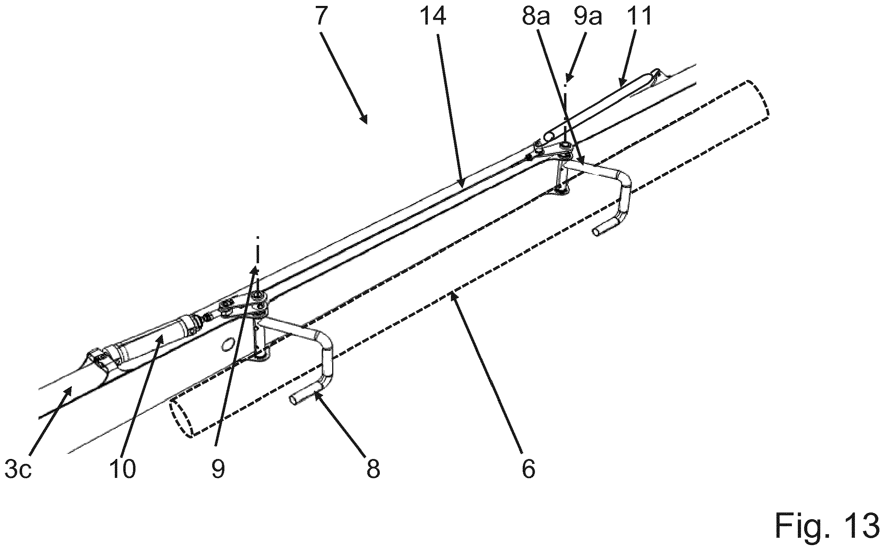

In Figur 13 ist eine Endschlauchhalterung mit zwei Haltebügeln 8, 8a gezeigt. Diese beiden Haltebügel 8, 8a sind über ein Übertragungselement 14 miteinander verbunden, sodass die bewirkten Verschwenkbewegungen durch den Aktor 10 und die Feder 11 für beide Haltebügel 8, 8a gleich sind. Das Übertragungselement 14 ist im hier gezeigten Beispiel als Seilzug ausgebildet. Falls wie oben angedeutet, der Aktor 10 und die Feder 11 eine bauliche Einheit bilden, ist das Übertragungselement 14 zweckmäßigerweise ein Gestänge, dass eine Schubübertragung zulässt.

### Bezuaszeichenliste

1 Großmanipulator
2 Knickmast
3 3a 3b 3c Mastsegment
4 4a 4b 4c Knickgelenk
5 Mastspitze
6 Endschlauch
7 Endschlauchhalterung
8 8a Haltebügel
9 9a Schwenkachse
10 Aktor
11 Feder
12 Verschraubung
13 Mastpositionserfassungseinrichtung
14 Übertragungselement
15 erster Abschnitt (Haltebügel)
16 zweiter Abschnitt (Haltebügel)
17 dritter Abschnitt (Haltebügel)
18 Drehschemel
a erste Verschwenkrichtung
f Freigaberichtung
z zweite Verschwenkrichtung
ANAnlagefläche
AUAuflagefläche

## Patentansprüche

1. Großmanipulator (1) mit einem Drehschemel (18), der drehbar um eine Hochachse auf einem Fahrzeuggestell des Großmanipulators (1) angeordnet ist, wobei auf dem Drehschemel (18) ein ausfaltbarer Knickmast (2) aufgebaut ist, der eine Mehrzahl von Mastsegmenten (3, 3a, 3b, 3c) aufweist, wobei die Mastsegmente (3, 3a, 3b, 3c) an Knickgelenken (4, 4a, 4b, 4c) jeweils um Knickachsen gegenüber einem benachbarten Mastsegment (3, 3a, 3b, 3c) verschwenkbar sind, wobei an dem letzten, die Mastspitze (5) bildenden Mastsegment (3c) ein flexibler Endschlauch (6) angeordnet ist, wobei der Endschlauch (6) an dem letzten Mastsegment (3c) mittels einer Endschlauchhalterung (7) fixierbar ist, wobei die Endschlauchhalterung (7) mindestens einen an dem letzten Mastsegment (3c) angeordneten Haltebügel (8, 8a) umfasst,
**dadurch gekennzeichnet, dass** der Haltebügel (8, 8a) gegenüber dem letzten Mastsegment (3c) in zumindest drei Schwenkstellungen verschwenkbar ausgebildet ist, wobei
- der Haltebügel (8, 8a) in der ersten Schwenkstellung den Endschlauch (6) an dem letzten Mastsegment (3c) hält, wobei die Endschlauchhalterung (7) den Endschlauch (6) in der ersten Schwenkstellung für einen Fahrbetrieb am letzten Mastsegment (3c) sichert,
- der Haltebügel (8, 8a) den Endschlauch (6) in der zweiten Schwenkstellung in einer Freigaberichtung (f) freigibt und
- der Haltebügel (8, 8a) in der dritten Schwenkstellung an das letzte Mastsegment (3c) angeklappt ist.

2. Großmanipulator (1) nach Anspruch 1, **dadurch gekennzeichnet, dass** die Form des Haltebügels (8, 8a) an die Außenkontur des letzten Mastsegmentes (3c) angepasst ist, derart, dass der Haltebügel (8, 8a) in der dritten Schwenkstellung im Wesentlichen über seine gesamte Längserstreckung an dem letzten Mastsegment (3c) anliegt.

3. Großmanipulator (1) nach Anspruch 1 oder 2, **dadurch gekennzeichnet, dass** der mindestens eine Haltebügel (8, 8a) in nur einer Schwenkachse (9, 9a) gegenüber dem letzten Mastsegment (3c) verschwenkbar ist.

4. Großmanipulator (1) nach einem der Ansprüche 1 bis 3, **dadurch gekennzeichnet, dass** ein Aktor (10) die Verschwenkung des mindestens einen Haltebügels (8, 8a) gegenüber dem letzten Mastsegment (3c) bewirkt.

5. Großmanipulator (1) nach einem der Ansprüche 1 bis 4, **dadurch gekennzeichnet, dass** eine Feder (11) die Verschwenkung des mindestens einen Haltebügels (8, 8a) gegenüber dem letzten Mastsegment (3c) bewirkt.

6. Großmanipulator (1) nach den Ansprüchen 4 und 5, **dadurch gekennzeichnet, dass** der Aktor (10) eine Verschwenkung des mindestens einen Haltebügels (8, 8a) in einer ersten Verschwenkrichtung (a) bewirkt und die Federkraft der Feder (11) eine Verschwenkung des mindestens einen Haltebügels (8, 8a) in einer zweiten, der ersten Verschwenkrichtung (a) entgegengesetzten Verschwenkrichtung (z) bewirkt.

7. Großmanipulator (1) nach einem der Ansprüche 1 bis 6, **dadurch gekennzeichnet, dass** der mindestens eine Haltebügel (8, 8a) räumlich gebogen ist und mindestens eine Anlagefläche (AN) und mindestens eine Auflagefläche (AU) für den Endschlauch (6) bildet.

8. Großmanipulator (1) nach Anspruch 7, **dadurch gekennzeichnet, dass** der Haltebügel (8, 8a) zweifach abgewinkelt ausgebildet ist, mit
- einem ersten, von der Schwenkachse (9, 9a) ausgehenden Abschnitt (15),
- einem sich an den ersten Abschnitt (15) anschließenden und gegenüber diesem um 90° abgewinkelten zweiten Abschnitt (16), der parallel zur Schwenkachse (9, 9a) verläuft und die Anlagefläche (AN) bildet, und
- einem sich an den zweiten Abschnitt anschließenden und gegenüber diesem wiederum um 90° abgewinkelten dritten Abschnitt (17), der die Auflagefläche (AU) bildet, wobei der dritte Abschnitt (17) relativ zu der durch den ersten und den zweiten Abschnitt (15, 16) gebildeten Ebene unter einem von 90° verschiedenen Winkel verläuft, vorzugsweise unter einem Winkel < 80°, besonders bevorzugt < 70°.

9. Großmanipulator nach einem der Ansprüche 1 bis 8, **dadurch gekennzeichnet, dass** der Haltebügel (8, 8a) eine im Wesentlichen rechteckige oder quadratische Innenkontur aufweist, durch die das einen dazu korrespondierend rechteckigen oder quadratischen Querschnitt aufweisende letzte Mastsegment (3c) in der dritten Schwenkstellung hindurchgreift.

10. Großmanipulator (1) nach einem der Ansprüche 1 bis 9, **dadurch gekennzeichnet, dass** der Knickmast (2) eine Mastpositionserfassungseinrichtung (13) umfasst, die dazu ausgebildet ist, die Position des letzten Mastsegments (3c) zu bestimmen, wobei eine Steuereinrichtung vorgesehen ist, die die Freigabe des Endschlauchs (6) aus der Endschlauchhalterung (7) abhängig von der erfassten Position des letzten Mastsegments (3c) steuert.

11. Großmanipulator (1) nach Anspruch 10, **dadurch gekennzeichnet, dass** die Mastpositionserfassungseinrichtung (13) einen Neigungssensor am letzten Mastsegment (3c) umfasst.

12. Großmanipulator (1) nach einem der Ansprüche 1 bis 11, **dadurch gekennzeichnet, dass** der mindestens eine Haltebügel (8, 8a) am letzten Mastsegment (3c) gegen Verschwenkung verriegelbar ist.

13. Großmanipulator (1) nach einem der Ansprüche 1 bis 12, **dadurch gekennzeichnet, dass** die Verschwenkung des mindestens einen Haltebügels (8, 8a) am letzten Mastsegment (3c) fernsteuerbar ist.

14. Großmanipulator (1) nach einem der Ansprüche 1 bis 13, **dadurch gekennzeichnet, dass** die Endschlauchhalterung (7) mehrere Haltebügel (8, 8a) umfasst, wobei die Haltebügel (8, 8a) über ein Übertragungselement (14) verbunden sind und hierdurch gemeinsam eine Verschwenkbewegung (a, z) um eine jeweilige Schwenkachse (9, 9a) der Haltebügel (8, 8a) ausführen.

15. Großmanipulator (1) nach Anspruch 14, **dadurch gekennzeichnet, dass** das Übertragungselement (14) als Seilzug oder Stange ausgebildet ist.

## Claims

1. Large manipulator (1) with a turntable (18), which is arranged rotatably about a vertical axis on a chassis of the large manipulator (1), wherein set up on the turntable (18) is an articulated boom (2), which can be folded out and has a plurality of boom segments (3, 3a, 3b, 3c), wherein the boom segments (3, 3a, 3b, 3c) are pivotable at articulated joints (4, 4a, 4b, 4c) respectively about articulated axes with respect to an adjacent boom segment (3, 3a, 3b, 3c), wherein a flexible end hose (6) is arranged on the last boom segment (3c) forming the boom tip (5), wherein the end hose (6) can be fixed on the last boom segment (3c) by means of an end hose holder (7), wherein the end hose holder (7) comprises at least one holding bracket (8, 8a) arranged on the last boom segment (3c),
**characterised in that** the holding bracket (8, 8a) is configured to be pivotable with respect to the last boom segment (3c) into at least three pivot positions, wherein
- the holding bracket (8, 8a) holds the end hose (6) on the last boom segment (3c) in the first pivot position, wherein the end hose holder (7) secures the end hose (6) in the first pivot position for a travel operation on the last boom segment (3c),
- the holding bracket (8, 8a) releases the end hose (6) in a release direction (f) in the second pivot position and
- the holding bracket (8, 8a) is folded onto the last boom segment (3c) in the third pivot position.

2. Large manipulator (1) according to claim 1, **characterised in that** the shape of the holding bracket (8, 8a) is adapted to the outer contour of the last boom segment (3c) in such a way that the holding bracket (8, 8a) rests substantially over its entire longitudinal extension on the last boom segment (3c) in the third pivot position.

3. Large manipulator (1) according to claim 1 or 2, **characterised in that** the at least one holding bracket (8, 8a) is pivotable in only one pivot axis (9, 9a) with respect to the last boom segment (3c).

4. Large manipulator (1) according to any one of claims 1 to 3, **characterised in that** an actuator (10) brings about the pivoting of the at least one holding bracket (8, 8a) with respect to the last boom segment (3c).

5. Large manipulator (1) according to any one of claims 1 to 4, **characterised in that** a spring (11) brings about the pivoting of the at least one holding bracket (8, 8a) with respect to the last boom segment (3c).

6. Large manipulator (1) according to claims 4 and 5, **characterised in that** the actuator (10) brings about pivoting of the at least one holding bracket (8, 8a) in a first pivot direction (a) and the spring force of the spring (11) brings about pivoting of the at least one holding bracket (8, 8a) in a second pivot direction (z) opposed to the first pivot direction (a).

7. Large manipulator (1) according to any one of claims 1 to 6, **characterised in that** the at least one holding bracket (8, 8a) is spatially curved and forms at least one contact surface (AN) and at least one support surface (AU) for the end hose (6).

8. Large manipulator (1) according to claim 7, **characterised in that** the holding bracket (8, 8a) is configured to be doubly angled, with
- a first section (15) starting out from the pivot axis (9, 9a),
- a second section (16) connected to the first section (15) and angled by 90° with respect to this, which second section runs parallel to the pivot axis (9, 9a) and forms the contact surface (AN), and
- a third section (17) connected to the second section and angled in turn by 90° with respect to this, which third section forms the support surface (AU), wherein the third section (17) runs at an angle different from 90° relative to the plane formed by the first and the second section (15, 16), preferably at an angle <80°, particularly preferably <70°.

9. Large manipulator (1) according to any one of claims 1 to 8, **characterised in that** the holding bracket (8, 8a) has a substantially rectangular or square inner contour, through which the last boom segment (3c), having a rectangular or square cross section corresponding thereto, extends in the third pivot position.

10. Large manipulator (1) according to any one of claims 1 to 9, **characterised in that** the articulated boom (2) comprises a boom position detection device (13), which is configured to determine the position of the last boom segment (3c), wherein a control device is provided, which controls the release of the end hose (6) from the end hose holder (7) depending on the detected position of the last boom segment (3c).

11. Large manipulator (1) according to claim 10, **characterised in that** the boom position detection device (13) comprises a tilt sensor on the last boom segment (3c).

12. Large manipulator (1) according to any one of claims 1 to 11, **characterised in that** the at least one holding bracket (8, 8a) can be locked against pivoting on the last boom segment (3c).

13. Large manipulator (1) according to any one of claims 1 to 12, **characterised in that** the pivoting of the at least one holding bracket (8, 8a) on the last boom segment (3c) can be remotely controlled.

14. Large manipulator (1) according to any one of claims 1 to 13, **characterised in that** the end hose holder (7) comprises several holding brackets (8, 8a), wherein the holding brackets (8, 8a) are connected by way of a transmission element (14) and hereby jointly execute a pivot movement (a, z) about a respective pivot axis (9, 9a) of the holding brackets (8, 8a).

15. Large manipulator (1) according to claim 14, **characterised in that** the transmission element (14) is configured as a cable pull or rod.

## Revendications

1. Manipulateur de grande taille (1) doté d'un chariot de rotation (18) qui est disposé de manière rotative autour d'un axe vertical sur un châssis de véhicule du manipulateur de grande taille (1), un mât articulé (2) dépliable étant monté sur le chariot de rotation (18) et présentant une pluralité de segments de mât (3, 3a, 3b, 3c), les segments de mât (3, 3a, 3b, 3c) pouvant être pivotés au niveau d'articulations (4, 4a, 4b, 4c), respectivement autour d'axes d'articulation par rapport à un segment de mât (3, 3a, 3b, 3c) adjacent, un tuyau d'extrémité (6) flexible étant disposé sur le dernier segment de mât (3c) formant la pointe du mât (5), le tuyau d'extrémité (6) pouvant être fixé sur le dernier segment de mât (3c) au moyen d'un support de tuyau d'extrémité (7), le support de tuyau d'extrémité (7) comprenant au moins un étrier de retenue (8, 8a) disposé sur le dernier segment de mât (3c),
**caractérisé en ce que** l'étrier de retenue (8, 8a) est réalisé pivotant dans au moins trois positions de pivotement par rapport au dernier segment de mât (3c), dans lequel
- dans la première position de pivotement, l'étrier de retenue (8, 8a) maintient le tuyau d'extrémité (6) sur le dernier segment de mât (3c), le support de tuyau d'extrémité (7) bloquant le tuyau d'extrémité (6) sur le dernier segment de mât (3c) dans la première position de pivotement pour un mode de conduite,
- dans la deuxième position de pivotement, l'étrier de retenue (8, 8a) libère le tuyau d'extrémité (6) dans une direction de libération (f) et
- dans la troisième position de pivotement, l'étrier de retenue (8, 8a) est rabattu contre le dernier segment de mât (3c).

2. Manipulateur de grande taille (1) selon la revendication 1, **caractérisé en ce que** la forme de l'étrier de retenue (8, 8a) est adaptée au contour extérieur du dernier segment de mât (3c), de telle manière que l'étrier de retenue (8, 8a), dans la troisième position de pivotement, s'applique sensiblement avec la totalité de son étendue longitudinale contre le dernier segment de mât (3c).

3. Manipulateur de grande taille (1) selon la revendication 1 ou 2, **caractérisé en ce que** l'au moins un étrier de retenue (8, 8a) peut être pivoté uniquement dans un axe de pivotement (9, 9a) par rapport au dernier segment de mât (3c).

4. Manipulateur de grande taille (1) selon l'une des revendications 1 à 3, **caractérisé en ce qu'**un actionneur (10) réalise le pivotement de l'au moins un étrier de retenue (8, 8a) par rapport au dernier segment de mât (3c).

5. Manipulateur de grande taille (1) selon l'une des revendications 1 à 4, **caractérisé en ce qu'**un ressort (11) réalise le pivotement de l'au moins un étrier de retenue (8, 8a) par rapport au dernier segment de mât (3c).

6. Manipulateur de grande taille (1) selon les revendications 4 et 5, **caractérisé en ce que** l'actionneur (10) réalise un pivotement de l'au moins un étrier de retenue (8, 8a) dans une première direction de pivotement (a) et la force élastique du ressort (11) réalise un pivotement de l'au moins un étrier de retenue (8, 8a) dans une deuxième direction de pivotement (z) opposée à la première direction de pivotement (a).

7. Manipulateur de grande taille (1) selon l'une des revendications 1 à 6, **caractérisé en ce que** l'au moins un étrier de retenue (8, 8a) est recourbé de manière tridimensionnelle et forme au moins une surface de contact (AN) et au moins une surface d'appui (AU) pour le tuyau d'extrémité (6).

8. Manipulateur de grande taille (1) selon la revendication 7, **caractérisé en ce que** l'étrier de retenue (8, 8a) est réalisé coudé deux fois, avec
- une première partie (15) partant de l'axe de pivotement (9, 9a),
- une deuxième partie (16) située dans le prolongement de la première partie (15) et coudée à 90° par rapport à cette dernière, ladite deuxième partie s'étendant parallèlement à l'axe de pivotement (9, 9a) et formant la surface de contact (AN), et
- une troisième partie (17) située dans le prolongement de la deuxième partie et à son tour coudée de 90° par rapport à cette dernière, ladite troisième partie formant la surface d'appui (AU), la troisième partie (17) s'étendant selon un angle différent de 90° par rapport au plan formé par la première et la deuxième partie (15, 16), de préférence selon un angle < 80°, de manière particulièrement préférée < 70°.

9. Manipulateur de grande taille selon l'une des revendications 1 à 8, **caractérisé en ce que** l'étrier de retenue (8, 8a) présente un contour intérieur sensiblement rectangulaire ou carré, à travers lequel passe, dans la troisième position de pivotement, le dernier segment de mât (3c) présentant une section transversale rectangulaire ou carrée correspondant à celui-ci.

10. Manipulateur de grande taille (1) selon l'une des revendications 1 à 9, **caractérisé en ce que** le mât articulé (2) comprend un moyen de détection de position de mât (13) qui est conçu pour déterminer la position du dernier segment de mât (3c), un moyen de commande étant prévu, lequel commande la libération du tuyau d'extrémité (6) hors du support de tuyau d'extrémité (7) en fonction de la position détectée du dernier segment de mât (3c).

11. Manipulateur de grande taille (1) selon la revendication 10, **caractérisé en ce que** le moyen de détection de position de mât (13) comprend un capteur d'inclinaison sur le dernier segment de mât (3c).

12. Manipulateur de grande taille (1) selon l'une des revendications 1 à 11, **caractérisé en ce que** l'au moins un étrier de retenue (8, 8a) peut être verrouillé sur le dernier segment de mât (3c) pour empêcher son pivotement.

13. Manipulateur de grande taille (1) selon l'une des revendications 1 à 12, **caractérisé en ce que** le pivotement de l'au moins un étrier de retenue (8, 8a) sur le dernier segment de mât (3c) peut être commandé à distance.

14. Manipulateur de grande taille (1) selon l'une des revendications 1 à 13, **caractérisé en ce que** le support de tuyau d'extrémité (7) comprend plusieurs étriers de retenue (8, 8a), les étriers de retenue (8, 8a) étant reliés par le biais d'un élément de transmission et exécutant par ce moyen conjointement un mouvement de pivotement (a, z) autour d'un axe de pivotement (9, 9a) respectif des étriers de retenue (8, 8a).

15. Manipulateur de grande taille (1) selon la revendication 14, **caractérisé en ce que** l'élément de transmission (14) est réalisé sous la forme d'un câble sous gaine ou d'une tige.
